# EUROPEAN PATENT APPLICATION

(11) **EP 4 450 938 A1**
(43) Date of publication of application: **23.10.2024**
(21) Application number: 23425016.5
(22) Date of filing: 18.04.2023
(51) Int. Cl.: G01L 1/22, B23K 11/25, G01B 7/16, G01L 5/00, G01L 1/26

(54) **STRAIN GAUGE**

(71) Applicant: Diakont S.r.l., 50025 Montespertoli (FI) (IT)
(72) Inventor: Fedosovskiy, Mikhail, 197720 Saint-Petersburg (RU); Agarkov, Vladimir Dmitrievich, 190013 Saint-Petersburg (RU)
(74) Representative: Emmi, Mario

(57) **Abstract**

The present invention relates to strain gauges, in particular to strain gauges used to determine a force on welding gun used for spot welding in automated assembly lines. A claimed strain gauge for welding gun comprises a housing that consists of at least two portions forming a single closed internal shielded space; a sensing element comprising one resistive strain sensor or at least two resistive strain sensors combined into a strain gage bridge, wherein said sensing element is arranged on an inner surface of one of the portions of the housing, wherein said housing portion has a material thinning in the area of the sensing element, wherein said sensing element is arranged between housing supports of the strain gauge, wherein the housing supports are arranged on the portion of the housing and are made of electrically non-conductive material of high rigidity, wherein a height of the housing supports is such that there is no contact between the housing and a surface of the welding gun; a ground line of the force data output device having a galvanic contact with at least one of the portions of the housing; the communication line connecting the sensing element with the force data output device comprises a damping bend. The technical effect achieved by the claimed strain gauge is its noise immunity and the ability to its operation under complex electromagnetic environment.

## Description

### FIELD OF THE INVENTION

The present invention relates to strain gauges, in particular to strain gauges used to determine a force on welding gun used for spot welding in automated assembly lines.

### BACKGROUND OF THE INVENTION

In industrial production of dimensional products, such as an auto body, etc., a contact spot welding is used for fastening metal parts to each other, implemented using a welding tool. More often, the tool is welding gun comprising at least one or two movable electrodes driven by at least one electric actuator. Known from a patent document FR2872073A1 (publ. 30.12.2005, B23K11/255) that a clamping force of welding gun to workpieces to be welded is one of the constantly observed welding parameters, which change in time allows to conclude about quality of the welds. Since a force developed by electrodes is directly proportional to the deformation that occurs at the time of welding on arms of the welding gun, strain gauges are used to measure the above parameter. The patent document FR2872073A1 describes one of the embodiments for placing the strain gauges on the arms of the welding gun. As a rule, the welding gun are mounted on an industrial manipulator (hereinafter, a robot), which moves them in space between weld spots. To weld the auto body the welding gun compress a part of the auto body, after which a welding current of several tens of thousands of amperes, for example, 50 kiloamperes, is passed through the electrodes of the welding gun. When current flows, an electromagnetic field is generated, which can interfere with electronic devices - inductive and conductive interferences on input and output signals, for example, on a signal of a force sensor arranged on the welding gun. Motors that drive the industrial robot and an electric drive of the welding gun also form additional interference. Moreover, one welding cell, in which the auto body is assembled, may comprise several of such robots and welding gun. The number of welding gun depends on the size of the auto body, the number of welding spots and required performance of the welding cell, which usually try to maximize. Therefore, a workshop with an automated assembly line consists of many devices, which, when welding an auto body, form a high-intensity magnetic field.

At the moment, sensors with a current signal output are most often used for welding gun, meaning that the excitation of the strain gauge is performed by controlling a current supplied to the current strain gauge. The disadvantages of the current strain gauges are a smaller range of measured forces compared to strain gauges, where the excitation is organized using a controlled voltage, and a modulator noise (bounce of keys) arising from the switchable elements. In addition to said disadvantages, when designing strain gauges, insufficient attention is paid to protective measures against electromagnetic interference. That is, a signal transmitted from the strain gauge to an amplifier contains a large amount of noise and distortion when operating in the workshop with the automated assembly line consisting of many devices that generate the high intensity magnetic field. In view of this, the operation of the strain gauges under complex electromagnetic environment requires additional protection against interference.

When using circuitry and software filtering tools to separate the useful signal and noise, the quality of the signal that enters an amplifier and then said filters is of great importance, since the delay time between actual and measured values depends on the signal quality. In particular, the more noisy signal is used for processing, the more time will be required to separate the useful signal and noise, and, accordingly, the greater will be a delay between the force actually acting at the moment of measurement and the values recorded as a measurement result. The delay time directly affects an operational speed of a feedback systems. Before welding, the electrodes move (or one electrode moves, depending on the number of moving electrodes of the welding gun) towards the workpieces and compress the workpieces with a predetermined force. To perform a welding cycle with a minimum time, it is required to minimize a movement time of the electrode to the workpieces. To quickly reduce the moving speed of the electrode after it touches a surface of one of the workpieces, it is required to quickly determine a place of contact. As an example, this is performed according to change of a force sensor signal. If the electrode is slowed down too late, it will hit the workpiece at high speed and damage it, resulting in defects, the need to rebuild the workpiece, or dispose it. Therefore, the delay affects the duration of the welding cycle, as well as the overall performance of the welding cell. It should be noted that the quality of the welding spot is reduced, if a force between the electrodes is not provided within the required tolerance - when the clamping force of the workpieces is too high, the resistance between the workpieces and the electrodes becomes too low, and the welding current does not heat up the metal sufficiently, due to which a welding nugget turns out smaller than it should be. When the clamping force of the workpieces is too low, the resistance between the workpieces and the electrodes, on the contrary, will be too high, which will lead to overheating of the material, its splashing between the workpieces, and, possibly, burning of the workpieces. All listed above are defective products. To confirm the quality of the weld spots a selective destructive or non-destructive welding quality control is performed on the line, which reduces the performance of the welding cell and the production line. Therefore, it is important to improve a signal quality (reduce noise appearing) received from the strain gauges to ensure high performance of the welding cell.

When welding, it is required to maintain or change a clamping force of the workpieces within a certain tolerance while the welding current flows through the workpieces. To do this, the clamping force of the workpieces is adjusted by a control system of the electromechanical drive of the welding gun electrode, for example, using a frequency converter. At step of heating and expansion of a metal of the workpieces in the area of formation of a weld nugget of the weld spot, a rigidity of the metal of the workpieces decreases, leading to a decrease in the clamping force of the workpieces by the electrodes, an increase in the resistance between the workpiece and the electrodes, an increase in the heating of the material of the workpieces, an appearance of a gap between the workpieces and a splash of workpiece material through it, which reduces a strength of the weld spot. To prevent deterioration of the welding quality, the clamping force is maintained at a constant level by moving the electrode in one direction or another, depending on whether it is required to increase or decrease the clamping force of the workpieces. The longer the delay between actual and measured forces, the later the control system changes an electrode position and the greater the risk of poor welding. Therefore, it is important to ensure the correct operation of the strain gauge for providing timely regulation of the clamping force to improve the welding quality and reduce the amount of control thereof.

Under considered conditions, it is reasonable to use a strain gauge with a data output digital interface and a minimum time delay between actual and measured clamping force parameters on the welding gun. Moreover, this strain gauge shall have small dimensions, be technologically advanced in production and have a minimum cost. A strain gauge is known from a patent document EP3489647B1 (publ. 29.05.2019 r., G01L1/2218) designed to be used with high forces without reducing the accuracy of their measurement.

In particular, the patent document EP3489647B1 discloses a force sensor arrangement, wherein a strain gauge and a board for converting a measured voltage at strain gauge leads into a digital signal are arranged in one volume, which allows to reduce a size of the force sensor. Such sensor can be mounted on an arm of welding gun to measure a force. However, the known solution has a disadvantage of reduced resistance to noise that is produced by equipment operating in a workshop for assembling an auto body, due to the fact that a housing covering the strain gauge and the converting board is not electrically connected to the housing portions, which is a deformable body of the sensor and has fastening elements to the strain measurement object. Furthermore, the lack of isolation between the housing of the force sensor and the arm of the welding gun leads to a decrease in noise immunity, which, when a welding current flows through the arm of these gun, leads to pickups on an input signal of the converting board, as well as on elements of the converting circuit of the converting board.

It should be noted that there are force sensors based on the piezoeffect. To operate on the welding gun, such sensors have a housing isolated from the welding gun. However, this requirement arises due to the design features of such force sensors. In piezo sensors, when pressure is applied to quartz plates, usually, a negative potential is sent to a measuring circuit, and a positive one is sent to the housing, thus, to avoid charge leakage, it is required to isolate the sensor housing from a measurement object.

A weight measurement sensor with a digital signal output is known from a patent document EP0319176B1 (publ. 07.06.1989, G01G3/14). The sensor has large dimensions, and a bridge circuit supplies an analog signal to a preamplifier (pos. 92 on the diagram), and then to an analog filter in a single-ended mode (signal transmission in a non symmetric form). In such switching on, the analog signal is most sensitive to a common mode and crosstalk interference exposure. Consequently, to obtain an accuracy required for operating in a feedback system, additional software filtering is required, which in turn increases a delay between actual forces on welding gun and the values recorded as a measurement result, which leads to a slow operational speed and, therefore, to a decrease in performance, making it impossible to use it to control force parameters in a spot welding technological process in automated productions.

A force measuring device is known from a patent document US5088330A (publ. 18.02.1992, G01G3/147), the device comprising a strain gauge transducer, means for excitation of an alternating voltage for the transducer generating a signal representing a force applied to said strain gauge, means for amplifying the signal, a low-pass filter, an analog-to-digital converter (ADC) for receiving said filtered signal. It should be noted that using an excitation technology with an alternating voltage makes this sensor expensive to manufacture, and using of filtering according to the proposed scheme gives a large delay between actual force values and data transmitted by the ADC, recorded as a measurement result.

Therefore, an object is to develop a strain gauge with interference immunity capable of operating in a complex electromagnetic environment, while providing high signal quality minimizing a delay between actual and measured forces. A further object is to develop a strain gauge having increased operation speed in the form of an increased updating frequency of the force data and improving the performance of an auto body assembly line using resistive spot welding.

### SUMMARY OF THE INVENTION

To solve the indicated technical problem a strain gauge is provided, the strain gauge designed for welding gun and comprises: a housing, a sensing element arranged within the housing, a force data output device arranged within the housing, a communication line connecting said sensing element with said force data output device and at least two housing supports for attaching the strain gauge to said welding gun. The strain gauge housing consists of at least two portions forming a single closed internal shielded space. The sensing element of the strain is arranged on an inner surface of one of the portions of the housing, wherein said portion of the housing has a material thinning in the area of the sensing element, wherein said sensing element is arranged between the housing supports of the strain gauge. The housing supports are arranged at the portion of the housing and are made of electrically non-conductive material of high rigidity, and a height of the housing supports is such that there is no contact between the housing and a surface of the welding gun. A ground line of the force data output device has a galvanic contact with the at least one of the portions of the housing. The communication line connecting the sensing element with the force data output device comprises a damping bend.

An important advantage of the claimed strain gauge is a low time delay when measuring between actual force acting on the arms of the welding gun and force values recorded as a measurement result. The low time delay is achieved by reducing the time of a signal filtering and digitization, which is enabled by supplying the signal from the sensing element to the force data output device with a low amplitude of the noise characteristic, which is achieved by means of high noise immunity of the strain gauge.

The strain gauge may also comprise the following features. The ground line of the force data output device can be connected to a common ground bus via a ferrite bead. The sensing element of the strain gauge can also comprise one resistive strain sensor or at least two resistive strain sensors combined into a strain gage bridge.

The sensing element may have additional shielding configured as a thin cooper plate attached to the housing inner surface above the thinning so that the cooper plate and the thinning form a separate shielded space within the shielded space of the housing.

The strain gauge may further comprise a metal tube for shielding a cable inlet of the strain gauge, the metal tube functioning as a wave guide and preventing propagation of inductive interference through the cable inlet.

The communication line connecting the sensing element with the force data output device may have a separate shielding configured as a metal braid.

The communication line connecting the sensing element with the force data output device comprises a damping bend between the sensing element (5) and the force data output device (4), wherein the damping bend (15) prevents influence of mechanical stresses arising in the communication line (6) onto the sensitive element (5).

The portion of the housing, on which the sensing element is mounted on the inside, may have slots from the outside for mounting the housing supports, wherein in case of the strain gauge operation in compression, the housing supports abut against inner end faces of the slots, and in case of the strain gauge operation in tension, the housing supports abut against the outer end faces of the slots, wherein the inner end faces of the slots are end faces arranged closer to the middle of the strain gauge.

The height of the housing supports may depend on amount of equipment arranged near the operation of the strain gauge that generates interference and on intensity of the generated electromagnetic interference.

The portions of the housing may be connected by an overlap allowing sealing of the internal shielded space of the housing.

The portions of the housing may be fastened by screws such that tightening torque of the screws is the same, which rigidly fixes the portions of the housing with one another.

Also, the portions of the housing may be fastened in such way that tightening torque of screws is different, and tightening torque for a first pair of screws rigidly fixes movement of the portions of the housing relative to each other, wherein tightening torque of the second pair of screws is lower and allows moving the portions of the housing relative to each other when the strain gauge is deformed, wherein between the housing and heads of screws of the second pair of screws springs are installed, which produce a controlled pressing force between the housing parts, ensuring absence of a gap between the housing parts with minimal influence of the housing rigidity on the deformable portion.

The force data output device located inside the shielded part of the housing is attached to one of its portions with the application of supports and screws which allows to use a mounting option implying that the tightening torque of all four screws to the support is the same, and that it rigidly fixes the force data output device and prevents it from movement relative to the housing.

In addition to the mounting option proposed above, a variant can be used in which a first pair of screws rigidly fixes the force data output device relative to one of the housing parts, while springs are placed between the supports and the second pair of screws, providing a controlled pressing force of the force data output device to the support - with the possibility of movement of the deformable housing part relative to the force data output device and with the minimal influence of rigidity of the force data output device onto the deformable housing portion.

An additional degree of freedom that allows the housing portion with the sensing element to deform relative to the force data output device and the other housing portions described above, allows for high repeatability of measurement results and increases measurement sensitivity for the same tensile force by minimizing the effect of the housing portions rigidity and the force data output device - as well as of the friction between these two - onto the sensing element.

Said additional features of the strain gauge provide high interference immunity and thereby contribute to its operation under complex electromagnetic environment.

### BRIEF DESCRIPTION OF THE DRAWINGS

The essence of the invention is explained in more detail by non-limiting examples of its implementation with reference to the accompanying drawings, on which:
Fig. 1 shows a longitudinal section of the strain gauge, which shows an arrangement of the constituent parts of the strain gauge incorporated therein.
Fig. 2 shows a possible embodiment of attachment the strain gauge on the arm of the welding gun of the C-gun type.
Fig. 3 shows a possible embodiment of attachment of the strain gauge on the arm of the welding gun of the X-gun type.
Fig. 4 shows the fastening elements of the sensor to the welding gun and a section of the housing, in which the fastening elements of the force data output device are visible.

### DETAILED DESCRIPTION

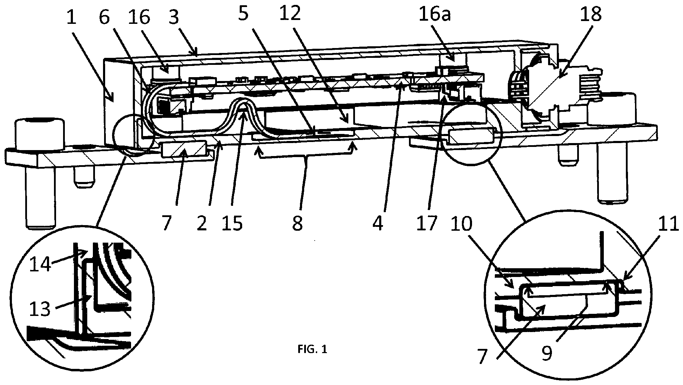

A strain gauge (Fig. 1) comprises an assemblable housing 1 comprising at least two portions 2 and 3, which contains a force data output device 4, a sensing element 5 representing a resistive strain sensor or at least two resistive strain sensors combined into a strain gage bridge. In particular, the presence of one resistive strain sensor allows measurement of compression or tension, and presence of two resistive strain sensors additionally rules out temperature errors due to the structure and connecting wires heating. Furthermore, with four resistive strain sensors the measuring bridge is not sensitive to the temperature fluctuations in the sensors which are glued to a piece, as well as to the temperature change of the connecting wires resistance. The strain gauge also comprises a communication line 6 connecting the force data output device 4 with the sensing element 5, and two supports 7 made of electrically non-conductive material of high rigidity, for example, ceramics, and raising the strain gauge above an electrode surface of welding gun.

According to the exemplary embodiment, the housing 1 has a shape of a parallelogram, in which the portion 2 is the lower part of the housing 1, and the portion 3 is the upper part of the housing 1. The portions 2 and 3 of the housing 1 are preferably made of brass, which provides an effective reduction of an electrical component of the electromagnetic field, which facilitates creating a shielded space within the housing 1. In addition to brass, the portions of the housing 1 can be made of aluminum, copper, silver, zinc or other materials that provide the required level of reduction of an electrical component of the electromagnetic field. It should be noted that in one of the embodiments, the housing may include more than two portions, for example, two covers, one of which has a thinning for mounting a sensing element and supports, and one shell or two brackets forming a closed shielded space in common, wherein each cover is attached to the shell or to the brackets with screws on both sides, at four points in total, but not limited to, other methods or number of attachment points can be selected.

It should be noted that in other embodiments, alternative arrangements may be used, in which the housing consists of three or more portions, for example, two bases and one shell or two brackets, which form a closed shielded space in common.

The portion 2 of the housing 1 is a single piece with material thinning on the inside and the outside. The thinning 8 arranged on the inside of the portion 2 is a recess in which the sensing element 5 is mounted, and the thinning arranged on the outside of the portion 2 are slots 9 designed for mounting housing supports 7.

It should be noted that in other embodiments, the thinning can be performed in another portion, and correspondingly, the sensing element is arranged on this portion. Apart from that, in other instances, the portion 2 shape can be more complex - for instance, the grooves of the side face and base of the portion 2 can be made in a way to set the required area and cross-sectional shape of the material in the mounting area of the sensing element 5.

The housing supports 7 are mounted in the slots 9 using adhesive so that one of the side faces of the housing support 7 abuts against the side end face 10 or 11 of the slots 9. Moreover, in case of the strain gauge operation in compression, the housing supports 7 abut against the inner end faces 10 of the slots 9, arranged closer to the center of the portion 2 of the housing 1, in case of strain gauge operation in tension, the housing supports 7 abut against the outer end faces 11 of the slots 9.

In another example embodiments the housing supports 7 can be attached using other methods that exclude its movement relative to the surface of the welding gun, for example, using a bolted connection, mounting plates, etc.

The thinning 8 of the portion 2 of the housing 1 is arranged between the housing supports 7 at an equidistant distance from each of them. The thinning 8 is designed to transfer the deformation from an electrode arm of the welding gun and to simultaneously linearly increase the deformation values, allowing the sensing element 5 to respond to a change in the stress-strain state at minimum stress values. In particular, the thinning 8 is configured such that stresses arising during compression or tension do not exceed the elastic limit in the entire operation range of the strain gauge, while their value would be proportionally greater than the stress values arising at the strain gauge mounting location on the welding gun, thereby ensuring precise operation at low force values.

After mounting the sensing element 5, the thinning 8 is covered (by attaching, for example, by gluing) with a thin copper plate 12 so that the cooper plate 12 and the thinning 8 form an additional separate shielded space, which reduces a noise track (interference) within the shielded space of the housing 1. It should be noted that in the absence of the proposed copper plate 12 the strain gauge housing and other proposed anti-interference means will provide sufficient shielding. Thus, the copper plate 12 is an optional additional shielding means against interference created inside the housing.

The portion 2 of the housing 1 comprises boards 13 having a height required to form a connection with the portion 3 of the housing 1 and allowing to perform a reliable tight connection of portions 2 and 3 of the housing 1. In case through grooves are present on the base and side faces of the portion 2 - as described above - an additional piece in the form of a bracket is installed on the outside of the sensor, providing the necessary level of shielding. This example of the structure is provided as a possible one - and is not intended to be limiting.

The portion 3 of the housing 1 comprises a thinning 14, which is performed inside the portion 3 along the perimeter (at all end surfaces) and which is mating to the boards 13 for connecting with the portion 2. The thinning 14 has a height equal to the height of the board 13, provides overlapping of the end faces of the boards 13 and eliminates a gap between the two portions 2 and 3. Said thinning 14 and boards 13 provide a wave effect in the form of multiple reflections of electromagnetic radiation therefrom, sufficient to reduce the impact of electromagnetic radiation through the formed connection, which facilitates obtaining a single closed shielded space inside the housing 1. The portions 2 and 3 of the housing 1 are attached with a screw connection, for example, using four screws arranged on the side faces of the portions 2 and 3 of the housing 1.

According to the example embodiment under consideration, when attaching one portion to another, at least two fixing options may be applied, but not limited to:
- Screws 24 and 25 are tightened with the same tightening torque, so that they rigidly fix both portions 2 and 3 of the housing 1 with one another,
- Two screws 25 are tightened with a torque that fixes two portions of the housing and prevents them from movement, two screws 24 are tightened with a smaller torque allowing one portion of the housing to move relative to another one during deformation; meanwhile, it is possible to install springs between the heads of the screws 24 and the portion 3 of the housing 1, which simultaneously provide controlled pressing force between the portions 2 and 3 of the housing 1 and the possibility of the portion 2 movement during its deformation relative to the portion 3 of the housing 1. The degree of freedom in the area of the screws 24 location allows for deformation of the housing portion containing the sensing element 8 with minimal influence of the housing 3 portion rigidity, that allows for high degree of results repeatability and a larger value of the deformation transfer coefficient. A larger value of the deformation transfer coefficient allows - given that the same value of force is applied to the force sensor - to obtain a larger number of Analog-to-Digital Converter (ADC) readings per Newton of force, which makes the sensor more sensitive.

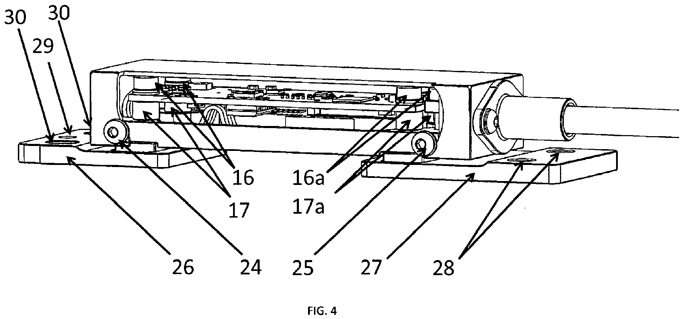

The screws 24 and 25 are arranged on both sides of the housing, Fig. 4 shows an illustration of the screws at one side only. It should be noted that other fixing options are possible.

The sensing element 5 is arranged directly under the force data output device 4, which reduces the length of the communication line 6 connecting them. Reducing the length of the communication line 6 leads to a decrease in the surface area of a conductor acting as an antenna and receiving inductive electromagnetic interference, therefore, the shorter the communication line, the less interference affects the sensing element 5.

The communication line 6 comprises a damping bend 15 and is placed in a metal braided mesh tube, which functions to reduce the electromagnetic effect on the conductors of the communication line 6, hereinafter referred to as a communication line screen. The experiment results have shown that in the absence of damping bend, stresses in the communication line 6 arising from tension affect the measurement results performed by the strain gage bridge, namely, the amplitudes of the range of values recorded as a measurement result increase (the noise track increases).

It should be noted that the portion 2 of the housing 1 also has thinning for mounting a screen of the communication line 6 by soldering, as well as for forming a damping bend 15 of the communication line 6 using adhesive.

The force data output device 4 is installed inside the shielded space of the strain gauge housing 1 and is attached to the portion 2 of the housing 1 via supports 17, 17a and screws 16 and 16a. Cylindrical bushings 17 and 17a allow fastening the data output device 4 at the required height from the inner surface of the portion 2 of the housing 1. Metallization is provided at the attachment points of the force data output device 4 to ensure reliable contact between the ground bus of the data output device 4 and the housing 1. Moreover, the housing supports 7 act as insulators and ensure the absence of direct contact between the housing 1 and the electrode surface of the welding gun.

According to the example embodiment under consideration, when mounting the force data output device 4, at least two attachment options can be implemented, but not limited to:
- screws 16 and 16a have the same tightening torque providing fixation of the force data output device 4 from moving due to friction;
- screws 16 have a tightening torque providing fixation of the force output device 4 from moving due to friction, and other screws 16a have a lower tightening torque that allows the force data output device 4 to move within a gap between a printed base and a cylindrical portion of the screw. Between the heads of the screws 16a and the device 4 it is possible to install springs, which would simultaneously provide pressing the device 4 to the supports 17a with the necessary force and the possibility of movement of the housing portion with the sensing element 8 relative to the device 4 during its deformation. This mounting option allows, in the course of measurements, to minimize the effect of the device 4 rigidity on the housing portion with the sensitive element 8 and the effect of friction between the device 4, screws 16a and supports 17a, which ensures high repeatability of the results and a greater value of the deformation transfer coefficient on the deformable area 8 of the sensor housing. The repeatability of the results is achieved by returning the deformable part of the housing with the sensing element 8 to its original state after removing the load, since the friction between the device 4, the screws 16a and the support 17a does not limit the movement of the support 17a. A greater value of the deformation transfer coefficient is provided by minimizing the influence of the rigidity of the device 4, since with the proposed mounting option during the measurement, the device 4 does not deform in the direction of force application due to the presence of a degree of freedom. A larger value of the strain transfer coefficient allows, with the same value applied to the force sensor, to obtain a larger number of ADC readings per Newton of force, which makes the sensor more sensitive,

It should be noted that other attachment options are possible.

The force data output device 4 generally, but not limited to, consists of an amplifying part, two hardware filters, an analog-to-digital converter, a microcontroller, a transceiver for a high-speed interface and is designed such that the influence of the common mode and crosstalk interference during signal processing from sensing element 5 is minimized.

The end face of the housing 1 comprising a cable outlet for connecting the strain gauge to peripheral devices comprises a metal tube to reduce the level of conductive interference induced on the connecting cable. The cable outlet can be configured in two ways:
1) using a connector (Fig. 1, position 18) allowing to disconnect the cable from the strain gauge;
2) mounting the cable directly to the force data output device 4 using a sealing ring.

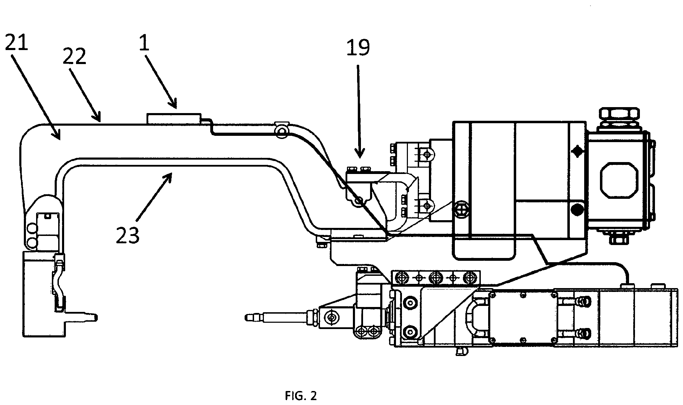

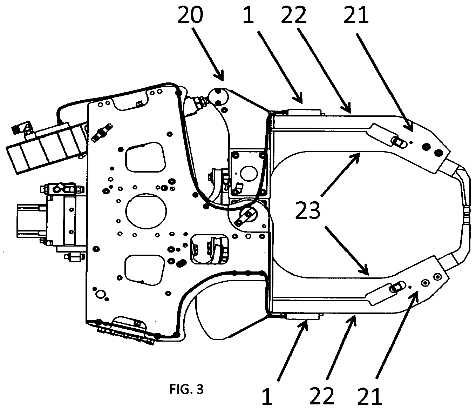

Figs. 2 and 3 show two types of the welding gun, Fig. 2 shows C-type welding gun 19, Fig. 3 shows X-type gun 20. Mounting of the strain gauge is performed on the arm of the electrode 21 of the welding gun both on outer plane 22 and on the inner plane 23 of the electrode. The mounting location is shown schematically and is not limited to the position shown in Figs. 2 and 3, the strain gauge can be arranged anywhere on the outer plane 22 and the inner plane 23 depending on the distribution of stresses in the specific structure of the electrode 21 of the welding gun.

Mounting the strain gauge on the X-type welding gun can be performed both on one of the two electrodes 21, and on both simultaneously, wherein mounting can be performed both on the outer plane 22 and on the inner plane 23 of the electrode 21.

To fix the housing supports 7 on the electrode of the welding gun several mounting methods can be selected. Several embodiments are provided below, that are not limiting, it should be noted that other methods or number of attachment points can be selected:
1) The housing supports 7 of the strain gauge can be mounted directly on the outer plane 22 and the inner plane 23 of the electrode of the welding gun and fixed using adhesive.
2) Mounting of the housing supports 7 can be performed using pins or elements with a threaded connection.
3) The housing supports 7 can be mounted on specialized spacers 26 and 27, allowing to increase the range of measured loads due to presence of mating slots on the spacers, against the end faces of which the housing supports 7 abut during mounting. In addition, due to the spacers, the strain gauge can be mounted with a preload, allowing more accurate measurements as regards the range where the loads have low values. Two holes 28 are performed in the spacer 27 for fitted screw, with which said spacer is attached to the welding gun surface. A threaded hole 29 is performed in the spacer 26 for mounting the equipment for tensioning the strain gauge and two oval holes 30 for fixing the strain gauge in a tensioned state, wherein before mounting the spacer 26 a friction gasket is placed between the spacer and the welding gun surface, which increases friction between these parts and prevents movement of the spacer 26 during strain gauge operation.

Noise immunity of the strain gauge capable of operating under complex electromagnetic environment, while still providing high signal quality minimizing a delay between actual and measured forces, as well as an improved strain gauge operating speed in the form of higher force update rates and facilitating to improve auto body assembly line performance using resistive spot welding, is provided due to the following features.
1) Using a shielded housing 1 forming an internal shielded space and using boards 13 for connecting with an overlap of two portions 2 and 3 of the housing 1, allowing sealing of the shielded space;
2)Using additional shielding of the sensing element 5, essentially representing a closed cavity inside the shielded housing 1, formed by five faces obtained by milling the thinning 8 on one of the portions (for example, portion 2 of the housing 1) and the sixth face obtained using the thin copper plate 12 attached to the inner surface of the portions 2 over the thinning 8.
3) Reducing the length of the communication line 6 between the sensing element 5 and the force data output device 4 with the digital interface by positioning the sensing element 5 directly under the force data output device 4.
4) Additional shielding of the communication line 6 using a metal braid;
5) Arrangement of the entire analog path, including the ADC, subject to inductive interference effect, inside the shielded space of the housing 1;
6) Shielding of a cable inlet from inductive interference using a brass tube;
7) Using housing supports 7 allowing to perform galvanic isolation of the strain gauge and the welding gun surface, required to eliminate the influence of asymmetrical conductive interference and to raise the strain gauge above the welding gun surface to the distance required to sufficiently reduce the inductive electromagnetic interference affecting the strain gauge during operation;
8) Combining the ground line of the force data output device 4 with a common ground bus via a ferrite bead;
9) Forming a damping bend 15 when mounting the communication line 6, allowing to reduce the mechanical impact on the sensing element 5, namely, to reduce a tension of the communication line 6 affecting the sensing element 5;

It should be noted that the claimed strain gauge minimizes the number of the portions of the housing, wherein these portions have a simple geometric shape, which does not require machining with high accuracy. When manufacturing using of uniform types of technological operations allows to reduce the production time due to no need to rearrange the workpiece and the processing tool when using several machines and makes the strain gauge manufacturing process more technologically advanced.

Connection of the strain gauge to peripheral devices is carried out using a cable, while it is possible to use several cable mounting options, the connection can be performed both using a connector and directly to the force data output device 4, according to the second option, an o-ring is used to seal the housing. To reduce the influence of inductive electromagnetic interference acting through the cable inlet a metal tube is used, providing a wave effect and reducing the level of interference impact due to multiple reflections.

To reduce the effect of inductive interference, the strain gauge arrangement combines two types of housing shielding, namely, shielding of signal circuits and shielding using grounding are applied. Shielding using grounding allows combining the potential of the ground bus of a measuring path of the strain gauge (ground line of the force data output device 4) and the common ground bus of the welding gun, which prevents the penetration of electromagnetic interference into the internal space of the housing of the strain gauge caused by the appearance of an intense magnetic field at the moment of switching on high voltage equipment in close proximity to the strain gauge. The ground line of the force data output device 4 is connected to a common ground bus using a ferrite bead, which prevents high-frequency noise from penetrating the ground line of the force data output device on the side of the common ground bus of the welding gun.

Additional shielding of the sensing element 5 with the thin copper plate 12 and shielding of the communication line 6 connecting the sensing element 5 and the force data output device 4 allows to reduce the influence of electromagnetic interference generated by the elements arranged on the force data output device 4 and residual electromagnetic impact penetrating inside the shielded space due to combined potential with a common ground bus of the welding guns.

The housing supports 7 allow to increase the distance from the surface of the welding gun to the housing 1 of the strain gauge, which significantly reduces the intensity of the magnetic field, proportionally increases the force that occurs in the arm of the welding gun at the moment of compression of the electrodes and performs galvanic isolation of the housing of the strain gauge and provides combining of the ground bus of the measuring path and the common ground bus at only one point via the ferrite bead.

Therefore, the claimed strain gauge has a high interference immunity, which allows its correct operation under complex electromagnetic environment. In particular, the interference immunity of the strain gauge provides a high quality of a signal containing minimal consequence of the noise, which minimizes a delay between actual and measured force, thereby allowing higher operating speed of the strain gauge in the form of increased force data update rate. The achieved effects of the claimed strain gauge facilitate increasing a productiveness of the auto body assembly line using resistive spot welding.

## Claims

1. A strain gauge for a welding gun, the strain gauge comprising:
- a housing (1);
- a sensing element (5) arranged within the housing (1);
- a force data output device (4) arranged within the housing (1);
- a communication line (6) connecting said sensing element (5) with said force data output device (4);
- at least two housing supports (7) for attaching the strain gauge to said welding gun,
- **characterized in that:**
- the housing (1) comprises at least two portions (2, 3) forming a single closed internal shielded space;
- said sensing element (5) is arranged on an inner surface of one of the portions (2, 3) of the housing (1), wherein said housing portion has a material thinning (8) in the area of the sensing element (5), wherein said sensing element (5) is arranged between the housing supports (7) of the strain gauge;
- the housing supports (7) are arranged on the portion (2, 3) of the housing (1) and are made of electrically non-conductive material, wherein a height of the housing supports (7) is such that there is no contact between the housing (1) and a surface of the welding gun;
- a ground line of the force data output device (4) has a galvanic contact with at least one of the portions (2, 3) of the housing (1).

2. The strain gauge according to claim 1, wherein the ground line of the force data output device (4) is connected to a common ground bus via a ferrite bead.

3. The strain gauge according to one or more of the previous claims, wherein the sensing element (5) comprises one resistive strain sensor or at least two resistive strain sensors combined into a strain gage bridge.

4. The strain gauge according to claim 1 or 3, wherein the sensing element (5) has an additional shielding configured as a thin cooper plate (12) attached to an inner surface of the housing (1) above the thinning (8) so that the cooper plate (12) and the thinning (8) form a separate shielded space within the shielded space of the housing (1).

5. The strain gauge according to any of the preceding claims, further comprising a metal tube for shielding a cable inlet of the strain gauge, the metal tube functioning as a wave guide and preventing propagation of inductive interference through the cable inlet.

6. The strain gauge according to claim 1, wherein the communication line (6) connecting the sensing element (5) with the force data output device (4) has a separate shielding configured as a metal braid.

7. The strain gauge according to claim 1, wherein the communication line (6) comprises a damping bend (15) between the sensing element (5) and the force data output device (4), wherein the damping bend (15) prevents influence of mechanical stresses arising in the communication line (6) onto the sensitive element (5).

8. The strain gauge according to claim 1, wherein the portion (2, 3) of the housing (1), on which the sensing element (5) is mounted on the inside, has slots (9) from the outside for mounting the housing supports (7), wherein in case of the strain gauge operation in compression, the housing supports (7) abut against inner end faces (10) of the slots (9), and in case of strain gauge operation in tension, the housing supports (7) abut against the outer end faces (11) of the slots (9), wherein the inner end faces (10) of the slots (9) are end faces arranged closer to the middle of the strain gauge.

9. The strain gauge according to one or more of the previous claims, wherein the height of the housing supports (7) depends on amount of equipment arranged near the operation of the strain gauge that generates interferences and on intensity of the generated electromagnetic interference.

10. The strain gauge according to one or more of the previous claims, wherein portions (2, 3) of the housing (1) are connected by an overlap allowing sealing of the internal shielded space of the housing (1).

11. The strain gauge according to one or more of the previous claims from 1 to 8, wherein the portions (2, 3) of the housing (1) are fastened by two pairs of screws (24, 25) such that tightening torque of the two pairs of screws (24, 25) is the same, which rigidly fixes the portions (2, 3) of the housing (1) with one another.

12. The strain gauge according to one or more of claims 1-10, wherein the portions (2, 3) of the housing (1) are fastened by two pairs of screws (24, 25) such that tightening torque of the two pairs of screws (24, 25) is different, and tightening torque for the first pair of screws (25) rigidly fixes movement of the portions (2, 3) of the housing (1) relative to each other, wherein tightening torque for the second pair of screws (24) is lower and allows moving the portions (2, 3) of the housing (1) relative to each other when the strain gauge is deformed, and between heads of screws of the second pair of screws (24) and the housing (1) springs are installed, which produce a controlled pressing force of the portion (2) to the portion (3) of the housing (1) and ensure absence of a gap between the portions (2) and (3) of the housing (1).

13. The strain gauge according to one or more of the previous claims, in which the force data output device (4) is rigidly fixed with the help of support (17) and two pairs of screws (16, 16a) to one of the parts of the housing (1).

14. The strain gauge according to one or more of claims 1-12, in which the force data output device (4) is rigidly fixed with the help of support (17) and a first pair of screws (16) to one of the parts of the housing (1), meanwhile between the support (17) and a second pair of screws (16a) springs are placed that provide a controlled pressing force of the force data output device (4) to the support (17) with possibility of movement of the deformed portion (2) of the housing (1) relative to the force data output device (4).

15. The strain gauge according to one or more of the previous claims, wherein the electrically non-conductive material of the housing supports (7) is a material with high rigidity, such as ceramics.
